# EUROPÄISCHE PATENTSCHRIFT

(11) **EP 2 987 610 B1**
(45) Veröffentlichungstag und Bekanntmachung des Hinweises auf die Patenterteilung: **17.01.2018**
(21) Anmeldenummer: 14181657.9
(22) Anmeldetag: 20.08.2014
(51) Int. Cl.: B29C 49/46

(54) **Formfüllmaschine zum Herstellen und Füllen von Kunststoffbehältern mit CO2-Recycling**
Mould filling machine for the manufacture and filling of plastic containers with CO2 recycling
Remplisseuse de moule destinée à fabriquer et à remplir des récipients en plastique par recyclage de CO2

(43) Veröffentlichungstag der Anmeldung: 24.02.2016
(73) Patentinhaber: Krones AG, 93073 Neutraubling (DE)
(72) Erfinder: Winzinger, Frank, 93073 Neutraubling (DE); Roidl, Wolfgang, 93073 Neutraubling (DE)
(74) Vertreter: Grünecker Patent- und Rechtsanwälte PartG mbB

(56) Entgegenhaltungen:
- EP-A1- 0 063 378
- EP-A1- 1 208 957
- WO-A1-2012/156014
- CH-A5- 695 940
- US-A- 4 367 187

## Beschreibung

### Gebiet der Erfindung

Die vorliegende Erfindung betrifft eine Formfüllmaschine zum Herstellen und Füllen von Kunststoffbehältern, insbesondere Kunststoffflaschen, in der CO₂, das dazu verwendet wird, zumindest teilweise einen Kunststoffbehälter zu formen, wiederverwendet wird.

### Stand der Technik

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist. Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter Die CH695940 offenbart eine Füllmaschine nach dem Oberbegriff des Anspruchs 1. Die EP0063378 und US4367187 offenbaren Wiederverwendung von Blasgasen in Blasformmaschinen. Aufgabe der vorliegenden Erfindung ist es, bekannte Vorrichtungen zum Ausformen und Füllen von Kunststoffbehältern, insbesondere solche Vorrichtungen, in denen die Kunststoffbehälter zumindest teilweise durch Blasformen mithilfe von CO₂ hergestellt werden, in vorteilhafter Weise weiterzubilden.

### Beschreibung der Erfindung

Oben genannte Aufgabe wird durch eine Formfüllmaschine gemäß Anspruch 1 gelöst. Vorteilhafte Ausführungsformen der Erfindung sind in den Unteransprüchen definiert.
Eine Formfüllmaschine umfasst wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter. Die Kunststoffbehälter werden zumindest teilweise durch das expandierende Umformen hergestellt. Ein Fertigstellen von durch das Umformen teilweise hergestellten Kunststoffbehältern kann durch das abzufüllende Produkt oder ein weiteres flüssiges Medium erfolgen.
Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.
Eine erfindungsgemäße Formfüllmaschine umfasst eine Behandlungsstation, die dazu ausgebildet ist, Kunststoffbehälter mithilfe von CO₂ durch Blasformen herzustellen und die hergestellten Kunststoffbehälter mit einem Produkt zu füllen und das zum Blasformen genutzte CO₂ zu recyceln. Somit umfasst eine erfindungsgemäße Formfüllmaschine eine Einrichtung zum Blasformen der Kunststoffbehälter mithilfe von CO₂, eine Einrichtung zum Füllen der hergestellten Kunststoffbehälter mit einem Produkt und Mittel zum Recyceln des zum Blasformen genutzten CO₂.
Eine andere erfindungsgemäße Formfüllmaschine umfasst eine Behandlungsstation, die dazu ausgebildet ist, die Kunststoffbehälter mithilfe von CO₂ teilweise durch Blasformen herzustellen und die teilweise hergestellten Kunststoffbehälter mit einem Produkt zu füllen und fertigzustellen und das zum teilweisen Blasformen genutzte CO₂ zu recyceln. Somit umfasst eine erfindungsgemäße Formfüllmaschine eine Einrichtung zum teilweisen Blasformen der Kunststoffbehälter mithilfe von CO₂, die dazu ausgebildet ist, teilweise hergestellte Kunststoffbehälter herzustellen, eine Einrichtung zum Füllen und Fertigstellen der teilweise hergestellten Kunststoffbehälter mit dem Produkt und Mittel zum Recyceln des zum Blasformen genutzten CO₂. Teilweises Blasformen bedeutet hier Blasformen um einen teilweise hergestellten Kunststoffbehälter zu erhalten. Insbesondere erhält der Behälter zwischen 20% und 95%, bevorzugt zwischen 30% und 90% seines späteren Volumens durch das teilweise Blasformen. Insbesondere erhält der Behälter zwischen 30% und 100%, bevorzugt zwischen 50% und 100% seiner Längserstreckung (von Mündung zu Boden) während des teilweisen Blasformens. Insbesondere wird bei dem teilweisen Vorblasen des Behälters eine Reckstange in diesen eingeführt, welche eine Längsreckung des Vorformlings bewirkt.

Gemäß diesen Alternativen kann die Formfüllmaschine also dazu ausgebildet sein, aus den Vorformlingen die Kunststoffbehälter vollständig durch Blasformen auszubilden oder nur teilweise durch Blasformen auszubilden. Im letzten Fall erfolgt die endgültige Herstellung (Fertigstellung des durch Blasformen teilweise hergestellten Kunststoffbehälters) beispielsweise durch das Einführen des in dem Kunststoffbehälter zu verpackenden flüssigen Produkts durch die Einrichtung zum Füllen und Fertigstellen der teilweise hergestellten Kunststoffbehälter. Die Fertigstellung des durch Blasformen teilweise hergestellten Kunststoffbehälters kann jedoch auch durch ein anderes flüssiges Medium, das von dem abzufüllenden Produkt verschieden ist, erfolgen.

Somit wird auch bereitgestellt eine Formfüllmaschine mit einer Behandlungsstation zum expandierenden Umformen von Kunststoffvorformlingen zu Kunststoffbehältern in einer Hohlform und Füllen der Kunststoffbehälter mit einem Produkt, wobei die Behandlungsstation dazu ausgebildet ist, Kunststoffbehälter mithilfe von CO₂ durch Blasformen teilweise herzustellen, die teilweise hergestellten Kunststoffbehälter durch Einleiten eines flüssigen Mediums fertigzustellen (fertig herzustellen), die fertig hergestellten Kunststoffbehälter mit einem Produkt zu füllen und das zum Blasformen genutzte CO₂ zu recyceln. Somit umfasst die Formfüllmaschine eine Einrichtung zum teilweisen Blasformen der Kunststoffbehälter mithilfe von CO₂, die dazu ausgebildet ist, teilweise hergestellte Kunststoffbehälter herzustellen; eine Einrichtung zum Fertigstellen der teilweise hergestellten Kunststoffbehälter durch Einleiten eines flüssigen Mediums in die teilweise hergestellten Kunststoffbehälter; eine Einrichtung zum Füllen der fertig hergestellten Kunststoffbehälter mit dem Produkt; und Mittel zum Recyceln des zum Blasformen genutzten CO₂.

Durch das Recyceln des zum Blasformen verwendeten CO₂ werden Ressourcen geschont. Insbesondere kann das recycelte CO₂ zum Karbonisieren des in den fertig hergestellten Kunststoffbehälter gefüllten Produkts und/oder zum Ausblasen des mit dem Produkt gefüllten Kunststoffbehälters Verwendung finden. Insbesondere kann das bei der Herstellung eines ersten Kunststoffbehälters recycelte CO₂ zum Vorblasen eines nachfolgenden zweiten Kunststoffbehälters und nachfolgend zum Karbonisieren des in den ersten und/oder zweiten Kunststoffbehälter gefüllten Produkts verwendet werden. Das recycelte CO₂ kann einer Einrichtung zum Karbonisieren des in den hergestellten oder fertiggestellten Kunststoffbehälter gefüllten Produkts mithilfe des recycelten CO₂, die außerhalb der Formfüllmaschine Maschinenraums angeordnet ist, zugeführt werden. Alternativ kann die Formfüllmaschine eine Einrichtung zum Karbonisieren umfassen. Beispielsweise kann das recycelte CO₂ in den Produktkanal oder -tank, durch den das abzufüllende Produkt der Einrichtung zum Füllen beziehungsweise Einrichtung zum Füllen und Fertigstellen der teilweise hergestellten Kunststoffbehälter zugeleitet wird, eingeleitet werden. Das recycelte CO₂ kann einem mehrstufigen Kompressor, der zum Komprimieren des zum Blasformen verwendeten CO₂ ausgebildet ist, zugeführt werden. Leitungen innerhalb des Kompressors und vom Kompressor zur Einrichtung zum (teilweisen) Blasformen können beheizbar sein, um eine Verflüssigung des unter Druck stehenden CO₂ zu vermeiden.

Insbesondere ist eine Vielzahl von Behandlungsstationen bzw. Form- und Füllstationen vorgesehen, welche insbesondere am Außenumfang eines sich kontinuierlich drehenden Rundläufers angeordnet sind. Bei dem Rundläufer handelt es sich vorzugsweise um ein Rad.

Der Rundläufer dreht sich insbesondere um eine vertikale Achse, deren Verlängerung den Erdmittelpunkt schneidet.

Insbesondere sind die Stationen alle in äquidistanten Abständen zueinander angeordnet. Die Stationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.

Ein Einleiten von CO₂ und dem Produkt von einem stationären Teil der Maschine (z.B. Gestell) in den drehenden Teil der Maschine bzw. zu der Behandlungsstation und ein Ausleiten von CO₂ nach dem Blasformen aus der Behandlungsstation kann mithilfe eines Drehverteilers erfolgen. Der Drehverteiler ist insbesondere im Bereich des Zentrums der Achse des Rundläufers angeordnet.

Die Einrichtung zum (teilweisen) Blasformen kann insbesondere zum Streckblasen von Vorformlingen ausgebildet sein. Ein Vorblasvorgang kann hierbei bei einem Druck von zwischen 3 und 20 bar, ein Fertigblasvorgang durch Blasformen bei einem Druck von zwischen 8 und 40 bar erfolgen. Durch den Fertigblasvorgang wird das Blasformen abgeschlossen. Es kann das vollständige oder teilweise Fertigstellen der Kunststoffbehälter durch den Fertigblasvorgang erfolgen. Das Fertigblasformen findet insbesondere bei höherem Druck im Behälter statt als das Vorblasen.

Gemäß einer Weiterbildung umfasst die Formfüllmaschine ein drehbares Transportrad (Karussell), an dem eine Mehrzahl an Behandlungsstationen mit ihren Hohlformen angebracht ist. In jeder der Mehrzahl an Behandlungsstationen/Hohlformen kann ein Kunststoffbehälter hergestellt und gefüllt werden.

Weiterhin kann die Formfüllmaschine eine Spüleinrichtung aufweisen oder mit einer solchen operativ verbunden sein, wobei die Spüleinrichtung zum Spülen eines Vorformlings oder des fertig hergestellten Kunststoffbehälters ausgebildet ist, und wobei Mittel zum Zuführen eines Teils des zum Karbonisieren verwendeten CO₂ zu der Spüleinrichtung vorgesehen sind.

Der Füllvorgang kann bei einem gesteuerten Unterdruck erfolgen, wobei Mittel zum Erzeugen des Unterdrucks dazu ausgebildet sein können, einen Unterdruck in der Hohlform zu erzeugen, in der aus dem Vorformling der Kunststoffbehälter geformt wird. Damit ist gemeint, dass zwischen einer Formwand und der Außenoberfläche des Vorformlings bzw. des Behälters ein Unterdruck während des Formens anliegen kann. Ebenso können Mittel zur Erzeugung eines Unterdrucks im teilweise fertig gestellten oder fertiggestellten Behälter Vorgesehen sein. Auf diese Weise kann der Behälter sehr schnell insbesondere mit dem Endprodukt gefüllt werden.

Unter Endprodukt wird eine Flüssigkeit verstanden, welche so lange in dem Behälter bleibt, bis ein Konsument den Behälter öffnet.

In sämtlichen oben beschriebenen Beispielen kann die Formfüllmaschine eine Verschlusseinrichtung aufweisen, die zum Verschließen der gefüllten Kunststoffbehälter, beispielsweise mithilfe von Drehverschlüssen, ausgebildet ist. Insbesondere findet das Verschließen in einem Zeitraum statt, innerhalb dem der Behälter noch in der Form bzw. Kavität, in der er geformt wurde, angeordnet ist. Die Verschlusseinrichtung befindet sich hierfür in der unmittelbaren Umgebung des Rundläufers, insbesondere in seiner Peripherie und spendet den Verschluss zu einem Zeitpunkt, bei welchem schon sämtliches Endprodukt im Behälter ist und eine Blas- oder Fülldüse vom Behälter abgehoben wurde.

Insbesondere findet die Herstellung bzw. Expansion und das Befüllen der Behälter innerhalb eines Raums mit kontaminationsarmer Umgebung statt. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird.
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder Senken eines Behälters und/oder die die Bewegung einer Blas- oder Fülldüse.
- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Der Raum ist insbesondere im Wesentlichen scheibenförmig ausgebildet. Er kann auch ring- oder torusförmig ausgebildet sein - die Drehachse ist dann außerhalb der kontaminationsarmen Umgebung.

Insbesondere wird der Behälter auf ein und demselben Karussell (Rundläufer) expandiert und mit dem zu verpackenden Endprodukt befüllt.

Insbesondere handelt es sich bei den Behältern vor dem Expandieren um Kunststoffvorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport bzw. weiteren Handling des Vorformlings/Behälters vorgesehen ist.

In Transportrichtung der Behälter stromaufwärts der Formfüllmaschine kann eine Erwärmungseinrichtung vorgesehen sein, welche die kalt angelieferten Vorformlinge erwärmt. Als Erwärmungseinrichtung kann ein Infrarotofen dienen, durch welchen die Vorformlinge transportiert werden. An zumindest einer Seite einer tunnelförmigen Heizstrecke durch den Ofen sind insbesondere Infrarotstrahler angeordnet. Anstatt des Infrarotofens kann auch eine Mikrowellenerwärmungseinrichtung vorgesehen sein, in der insbesondere für jeden Vorformling individuell zugeordnete Kavitäten zur Erwärmung angeordnet sind. Während es sich beim Mikrowellenofen bevorzugt um einen Rundläufer handelt, werden die Vorformlinge beim Infrarotofen zumindest einen Teil der Strecke geradlinig transportiert.

Anstatt der eben beschriebenen Verfahren und Vorrichtungen zum Erwärmen von kalten (Umgebungstemperatur) Vorformlingen können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. Unter Umständen muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt, kurz bevor diese an die Formfüllmaschine weitergegeben werden. Werden die Vorformlinge innerhalb eines Reinraums spritzgegossen, so ist unter Umständen keine weitere Sterilisation dieser nötig, wenn sich der Reinraum bis zu einer Position hin erstreckt, an der ein Verschluss auf den Behälter nach dem Befüllen aufgebracht wird.

Insbesondere ist das Endprodukt ein karbonisiertes Getränk.

Insbesondere sind alle Einrichtungen (Kompressor, Leitungen, Tanks, Drehverteiler, Formfüllstationen, Blas-/Fülldüse) in den Bereichen beheizbar, mit denen das CO₂ in Kontakt kommt.
Es wäre auch denkbar, das CO₂ der Maschine flüssig zuzuführen und es innerhalb der Maschine kurz vor dem Einleiten in den Vorformling so zu erwärmen, dass es gasförmig wird.
Insbesondere besteht der Vorformling bzw. Behälter zu mehr als 80% aus PET. Insbesondere weist der fertig geformte Behälter einen Petaloidboden auf.
Insbesondere wenn ein nicht karbonisiertes Getränk abgefüllt werden soll, kann man anstatt des CO₂ 's auch ein anderes inertes Gas - insbesondere Stickstoff - für alle in dieser Schrift genannten Verfahren und Vorrichtungen (bis auf das Karbonisieren) einsetzen. Insbesondere bietet dies den Vorteil, dass wenig Sauerstoff im Behälter vorhanden ist.
Wenn das CO₂ zum Recyceln aus der Maschine durch den Drehverteiler ausgeleitet wird, wird hierfür insbesondere eine separate Spur im Drehverteiler vorgesehen.
Neben einer produktführenden Spur, einer CO₂ - führenden Spur zum Einleiten von CO₂ in den drehenden Teil der Maschine kann auch eine weitere Spur im Drehverteiler zum Herausführen von CO₂ vorgesehen werden. Insbesondere wird das herausgeführte CO₂ zwischen zwei Kompressorstufen eingeführt und/oder zum Karbonisieren des Getränks verwendet und in Leitungen zu einer oder beiden dieser Einrichtungen geführt.

Die oben genannte Aufgabe wird auch gelöst durch ein Verfahren nach Anspruch 12. Schließlich kann das Fertigstellen des Kunststoffbehälters auch mithilfe eines von dem abzufüllenden Produkt verschiedenen flüssigen Mediums erfolgen. Somit wird bereitgestellt ein Verfahren zum Herstellen und Füllen eines Kunststoffbehälters mit den an einer Behandlungsstation einer Formfüllmaschine ausgeführten Schritten: Recken eines Vorformlings und Einleiten von CO₂ in den Vorformling, um den Kunststoffbehälter teilweise herzustellen, Ausleiten des in den Vorformling eingeleiteten CO₂ nach dem teilweisen Herstellen des Kunststoffbehälters, Einleiten eines flüssigen Mediums in den teilweise hergestellten Kunststoffbehälter nach dem zumindest teilweisen Ausleiten des CO₂, um den Kunststoffbehälter fertigzustellen, Ausleiten des in den teilweise hergestellten Kunststoffbehälter eingeleiteten flüssigen Mediums nach dem Fertigstellen des Kunststoffbehälters, Füllen des fertiggestellten Kunststoffbehälters mit einem Produkt nach dem Ausleiten des flüssigen Mediums und Wiederverwenden des ausgeleiteten CO₂. Das Wiederverwenden des ausgeleiteten CO₂ kann die Verwendung desselben zum Karbonisieren des in den hergestellten oder fertiggestellten Kunststoffbehälter gefüllten Produkts oder zum Ausblasen des mit dem Produkt gefüllten Kunststoffbehälters umfassen. Prinzipiell kann das Verfahren jegliche Schritte umfassen, um die von den strukturellen Merkmalen der oben beschriebenen Beispiele der erfindungsgemäßen Füllformmaschine bereitgestellten Funktionen auszuführen. Das CO₂ kann auch zu einem Ausblasen des Vorformlings verwendet werden, bevor dieser verformt wird.
Zum Zuführen von CO₂ können Ventile vorgesehen werden, welche steuerbar geöffnet werden können. Durch ein Ventil kann ein CO₂ - führender Tank oder Ringkanal unter einem Vorblasdruck mit dem herzustellenden Behälter verbunden werden. Durch ein zweites Ventil kann ein unter einem Fertigblasdruck stehender Ringkanal oder Tank mit dem herzustellenden Behälter verbunden werden. Insbesondere wird zuerst das erste Ventil geöffnet, dann wieder geschlossen und dann das zweite Ventil geöffnet. Während das zweite Ventil noch geöffnet ist oder unmittelbar nach dem Schließen des zweiten Ventils wird das erste Ventil nochmal geöffnet, um einen Teil des CO₂ 's wieder in den ersten Tank zurückzuführen. Anschließend können die anderen oben diskutierten Schritte der Verwendung zusätzlich stattfinden.
Wenn man zum Karbonisieren des Getränks oder zum Ausblasen der Behälter oder Vorformlinge eine größere Menge benötigt als das dann nur noch unter Vorblasdruck stehende CO₂ im Behälter, so kann man auch auf das Recycling in den Tank unter Vorblasdruck verzichten.
Im Folgenden werden Ausführungsformen einer erfindungsgemäßen Formfüllmaschine unter Bezugnahme auf die Zeichnung beschrieben.
Figur 1 veranschaulicht allgemein eine Formfüllmaschine gemäß einem Beispiel der vorliegenden Erfindung.
Figur 2 veranschaulicht eine Behandlungsstation der Formfüllmaschine von Figur 1 in einem Längsschnitt.
Figur 3 veranschaulicht ein Beispiel für ein erfindungsgemäßes CO₂-Recycling, wie es in der in den Figuren 1 und 2 gezeigten Formfüllmaschine implementiert sein kann.
Figur 4 zeigt ein Beispiel für eine erfindungsgemäße Formfüllmaschine, wobei recyceltes CO₂ von einer Behandlungsstation einem Karbonisierer zugeführt wird.
Figur 5 zeigt ein Beispiel für eine erfindungsgemäße Formfüllmaschine, in der recyceltes CO₂ in einen Produktkanal einer Behandlungsstation eingeleitet wird.

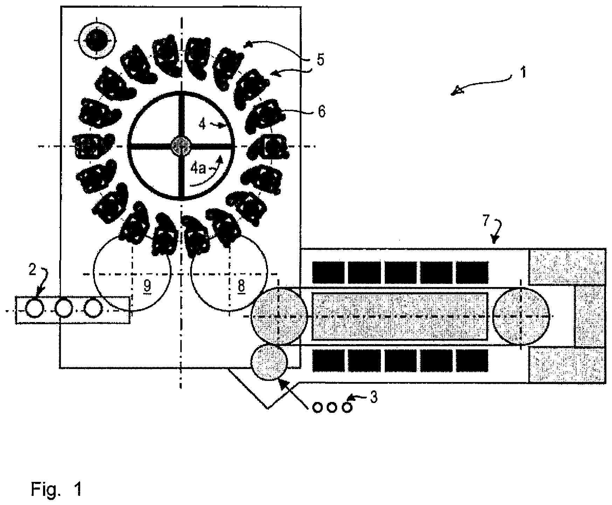

Die vorliegende Erfindung betrifft eine Formfüllmaschine, in der sowohl die Herstellung von Kunststoffbehältern als auch die Füllung der Kunststoffbehälter erfolgt. Die Kunststoffbehälter können beispielsweise aus PET oder PVC hergestellt sein. Figur 1 zeigt allgemein eine solche Formfüllmaschine 1. Die Formfüllmaschine 1 ist als Rundläufer ausgebildet und umfasst eine Mehrzahl an Behandlungsstationen 5, die jeweils eine Hohlform 6 aufweisen. In dem gezeigten Beispiel sind die einzelnen Behandlungsstationen mit ihren Hohlformen auf einem drehbaren Transportrad 4 mit Drehrichtung 4a symmetrisch um die Drehachse des Transportrads 4 angebracht. Vorformlinge 3 werden aus einem Ofen 7, in dem diese Vorformlinge 3 zur nachfolgenden Formung vorgeheizt werden, über einen Einlaufstern 8 an die Hohlformen 6 der Behandlungsstationen 5 übergeben. Dort werden aus den Vorformlingen 3 Kunststoffbehälter 2 geformt und es werden in den Hohlformen 6 diese Kunststoffbehälter 2 mit einem abzufüllenden Produkt gefüllt und über einen Auslaufstern 9 ausgegeben. In den Behandlungsstationen 5 können aus den Vorformen 3 die Kunststoffbehälter 2 vollständig oder teilweise durch Blasformen hergestellt werden. Wenn sie lediglich teilweise durch das Blasformen hergestellt werden, erfolgt in einem ersten Stadium ein teilweises Blasformen der Vorformlinge 3 gefolgt von einem zweiten Stadium, in dem die Kunststoffbehälter 2 mithilfe des eingefüllten Produkts fertig hergestellt werden. Im Zentrum des Rads nur schemenhaft angedeutet sieht man einen Drehverteiler, an den mindestens eine stationäre Leitung von Produkt und eine stationäre Leitung von CO₂ angeschlossen sind. Nach der Einführung der Medien in den Drehverteiler werden diese in den drehenden Teil 4 der Maschine gepumpt bzw. geführt.

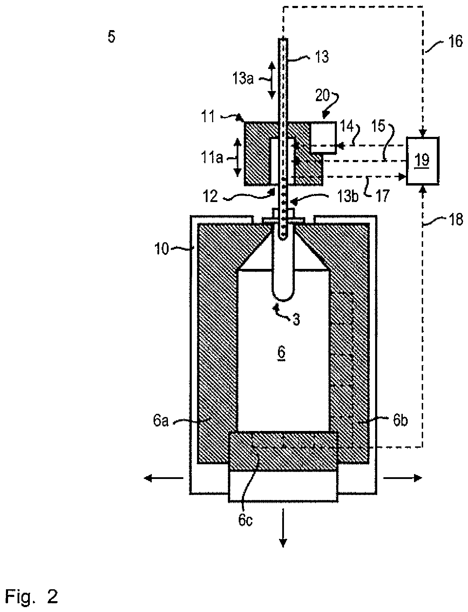

Figur 2 zeigt sehr schematisch einen Längsschnitt durch eine Behandlungsstation 5 der in Figur 1 gezeigten Formfüllmaschine. Die Hohlform oder Kavität 6 der Behandlungsstation 5 weist die Formteile 6a bis 6c jeweils in einem Formträgerteil 10 auf. Die Behandlungsstation 5 umfasst eine bewegliche Ventileinheit mit einem Ventilkopf (Ventilblock) 11, wobei der Hub der gesamten Ventileinheit in Figur 2 durch das Bezugszeichen 11a veranschaulicht wird. Der Ventilkopf 11 weist eine Düse 12 auf, durch welche CO₂ und das Produkt in den Vorformling bzw. teilweise oder vollständig hergestellten Kunststoffbehälter eingeleitet werden. Weiterhin umfasst die Behandlungsstation 5 eine bewegliche Reckstange 13, wobei der Hub der Reckstange 13 bezüglich der Ventileinheit durch das Bezugszeichen 13a veranschaulicht wird. Die Reckstange 13 weist Öffnungen 13b auf. Diese können zum Ausbringen oder Absaugen des CO₂ nach Beenden des (teilweisen) Blasformens verwendet werden. Auch kann durch diese Öffnungen 13b CO₂ zumindest teilweise für den Blasformprozess zugeführt werden - je nach Schaltung der Ventile. Die Bewegungsrichtungen der Reckstange 13a und der Düse 11a sind vertikal.

Weiterhin zeigt Figur 2 eine Zuleitung 14 für CO₂, geliefert von einem mit einer Kompressoreinrichtung verbundenem Ventil 20, und eine Zuleitung 15 für das abzufüllende Produkt. Jede dieser Zuleitungen 14 und 15 kann entsprechende Ventile zum Regeln des Gas- bzw. Produktstroms durch die Zuleitungen aufweisen. Weiterhin sind eine Leitung 16 zum Absaugen oder Abführen des CO₂ nach Beenden des (teilweisen) Blasformens durch die Öffnungen 13b der Reckstange 13, eine pneumatische Absaugleitung 17 für den Innenraum des Kunststoffbehälters beim Füllen und eine pneumatische Absaugleitung 18 für die Hohlform (bzw. die Außenseite des Kunststoffbehälters beim Füllen vorgesehen. Sämtliche Leitungen 14, 15, 16, 17 und 18 enden in dem gezeigten Beispiel in einem Drehverteiler 19. Der Drehverteiler 19 zum Verteilen der einzelnen Medien kann ein gemeinsamer Drehverteiler für sämtliche Behandlungsstationen der Formfüllmaschine sein.

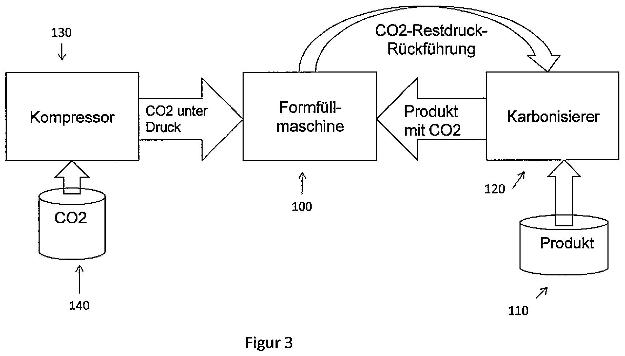

Ein Beispiel dafür, wie das erfindungsgemäße CO₂-Recycling in einer Behandlungsstation einer Formfüllmaschine mit einem Ventilblock 100 implementiert sein kann, ist in Figur 3 gezeigt. In der Behandlungsstation der Formfüllmaschine erfolgt sowohl das Herstellen als auch das Füllen von Kunststoffbehältern mit einem kohlensäurehaltigen flüssigen Produkt. Das noch nicht karbonarisierte Produkt wird von einem Produkttank 110 einem Karbonisierer 120 zum Versetzen mit CO₂ zugeführt. Das karbonisierte Produkt wird in die den Ventilblock 100 der Behandlungsstation geleitet der Formfüllmaschine, in welcher es in einen teilweise oder vollständig hergestellten Kunststoffbehälter gefüllt wird. Die Füllung kann auch gleichzeitig zur Fertigstellung des Kunststoffbehälters dienen. Auch kann vorgesehen sein, dass vor der Füllung die Fertigstellung des Kunststoffbehälters mithilfe eines weiteren flüssigen Mediums, beispielsweise Wasser, erfolgt, das nach Fertigstellung des Kunststoffbehälters aus demselben ausgeleitet wird. Die Strömung dieses weiteren Mediums kann ebenfalls über den Drehverteiler 19 in die Maschine eingeleitet werden.

In der Behandlungsstation erfolgt ein Blasformen von Vorformlingen. Das zum Blasformen verwendete CO₂ wird in dem gezeigten Beispiel von einem Kompressor 130 geliefert, der aus einem CO₂-Tank 140 versorgt wird. Nach dem Blasformvorgang wird CO₂ aus der Behandlungsstation recycelt. Wie in der Figur 3 gezeigt, kann das unter einem Restdruck stehende CO₂ dem Karbonisierer 120 zur Verfügung gestellt werden. Ebenso kann ein Anteil des CO₂ nach dem Blasformvorgang einer (Zwischen-)Druckstufe des Kompressors 130 oder an seinen Anfang zugeführt werden (nicht gezeigt).

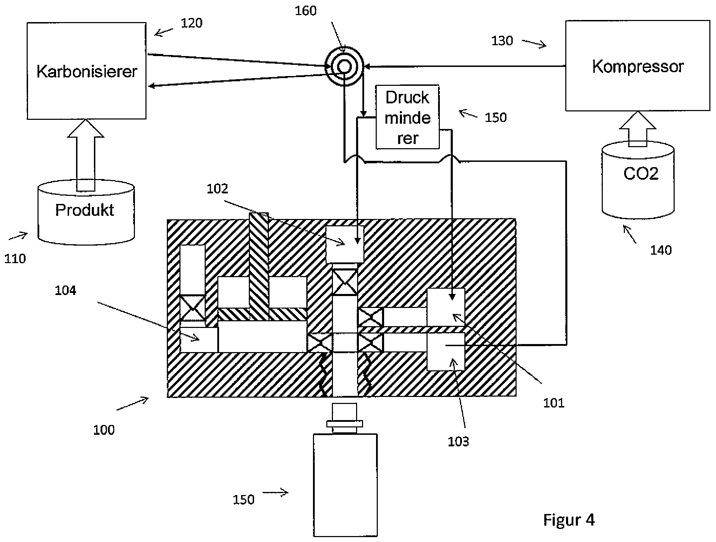

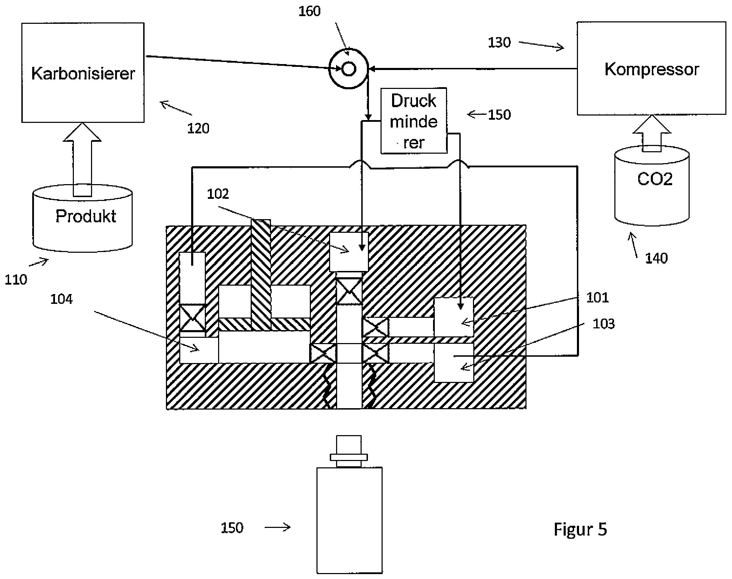

Die Figuren 4 und 5 veranschaulichen das Recycling von zum Blasformen verwendeten CO₂ in Ausführungsform der erfindungsgemäßen Formfüllmaschine. Beide Figuren zeigen einen Ventilblock 100 einer Behandlungsstation einer Formfüllmaschine mit einem CO₂-Vorblasdruckkanal - oder speicher 101, einem CO₂-Fertigblasdruckkanal - oder speicher 102, einem CO₂-Recyclingkanal oder -speicher 103 und einem Produktkanal 104 über die ein Vorformling bzw. ein hergestellter Behälter 150 geformt bzw. gefüllt werden. Das oben genannte weitere Medium, das zum Fertigstellen der Kunststoffbehälter verwendet werden kann, kann ebenfalls durch den Produktkanal 104 in einen durch Blasformen teilweise hergestellten Kunststoffbehälter eingeleitet werden. Eine Reckstange kann auch vorhanden sein.

Ein Vorblasen eines Vorformlings kann bei 2 bis 20 bar erfolgen. Das entsprechend unter Druck gesetzte CO₂ wird von einem durch einen CO₂-Tank 140 gespeisten Kompressor 130 (aus einer letzten Druckstufe desselben) über einen Drehverteiler 160 in den CO₂-Vorblasdruckkanal 101 über einen Druckminderer 444 geliefert. Ein Fertigblasen des vorgeblasenen Vorformlings und somit beispielsweise ein Fertigstellen eines Kunststoffbehälters 150 kann bei 8 bis 40 bar erfolgen. Hierfür wird das CO₂ ohne Druckminderer direkt in den Fertigblasdruckkanal 102 des Ventilblocks 100 der Behandlungsstation geleitet. Geeignete Drücke im Vorblaskanal oder im Fertigblaskanal (nicht gezeigt) können allgemein über einen Druckminderer 444 eingestellt werden. Nach dem Blasvorgang kann über den CO₂-Recyclingkanal 103 CO₂ zur Weiterverwendung abgeleitet werden.

Der teilweise oder vollständig hergestellte Kunststoffbehälter 150 wird mit einem karbonisierten flüssigen Produkt gefüllt. Hierzu wird ein aus einem Produkttank 110 geliefertes Produkt in einem Karbonisierer 120 mit CO₂ versetzt und über den Drehverteiler 160 in den Produktkanal 104 des Ventilblocks 100 der Behandlungsstation geliefert. Wie in den Figuren 4 und 5 gezeigt, kann die Strömung des CO₂ und des karbonisierten Produkts durch Ventile gesteuert werden.

In der in Figur 4 gezeigten Ausführungsform wird das beim Blasformen verbrauchte, unter einem Restdruck stehende CO₂ über den Drehverteiler im drehenden Teil der Maschine gehalten und über den Kanal 103 wieder dem Produktkanal 104 zugeführt., wo es dem Karbonisieren des aus dem Produkttank 110 gelieferten Produkts dienen kann. Ein Teil des unter dem Restdruck stehenden CO₂ könnte zusätzlich einer Druckstufe des Kompressors 130 zugeführt werden. Nach dem Abfüllen des Produkts in einen Kunststoffbehälter 150 kann gegebenenfalls ein Ausblasen des fertig gefüllten Kunststoffbehälters 150 erfolgen. Auch für ein solches Ausblasen kann ein Teil des unter dem Restdruck stehenden CO₂ Verwendung finden. In der in Figur 5 gezeigten Ausführungsform hingegen wird das beim Blasformen verbrauchte, unter einem Restdruck stehende CO₂ direkt in den Produktkanal 104 geleitet, wo es zum Karbonisieren des abzufüllenden Produkts beitragen kann.

## Patentansprüche

1. Formfüllmaschine (1) mit einer Behandlungsstation zum expandierenden Umformen von Kunststoffvorformlingen (3) zu Kunststoffbehältern (2) in einer Hohlform (6) und Füllen der Kunststoffbehälter (2) mit einem Produkt, wobei die Formfüllmaschine (1) umfasst:
eine Einrichtung zum Blasformen zur zumindest teilweisen Herstellung der Kunststoffbehälter (2) mithilfe von CO₂; und
eine Einrichtung zum Füllen der zumindest teilweise hergestellten Kunststoffbehälter (2) mit dem Produkt;
**dadurch gekennzeichnet, dass** die Formfüllmaschine weiter umfasst:
Mittel zum Recyceln des zum Blasformen genutzten CO₂, und eine Einrichtung zum Karbonisieren des in die zumindest teilweise hergestellten oder fertiggestellten Kunststoffbehälter (2) gefüllten Produkts mithilfe des recycelten CO₂.

2. Formfüllmaschine (1) gemäß einem Anspruch 1, wobei
die Einrichtung zum Blasformen dazu ausgebildet ist, teilweise hergestellte Kunststoffbehälter (2) herzustellen;
die Einrichtung zum Füllen zum Fertigstellen der teilweise hergestellten Kunststoffbehälter (2) mit dem Produkt ausgebildet ist.

3. Formfüllmaschine (1) gemäß Anspruch 1, wobei
die Einrichtung zum Blasformen dazu ausgebildet ist, teilweise hergestellte Kunststoffbehälter (2) herzustellen; und weiterhin mit
einer Einrichtung zum Fertigstellen der teilweise hergestellten Kunststoffbehälter (2) durch Einleiten eines flüssigen Mediums in die teilweise hergestellten Kunststoffbehälter (2); und wobei
die Einrichtung zum Füllen zum Füllen der fertig hergestellten Kunststoffbehälter (2) mit dem Produkt ausgebildet ist.

4. Formfüllmaschine (1) gemäß einem der vorhergehenden Ansprüche, in der die Mittel zum Recyceln des zum Blasformen genutzten CO₂ das recycelte CO₂ zum Karbonisieren des in den hergestellten oder fertiggestellten Kunststoffbehälter (2) gefüllten Produkts oder zum Ausblasen des mit dem Produkt gefüllten Kunststoffbehälters (2) bereitstellen.

5. Formfüllmaschine (1) gemäß einem der vorhergehenden Ansprüche, in der das bei der Herstellung eines ersten Kunststoffbehälters (2) recycelte CO₂ zum Vorblasen eines zweiten Kunststöffbehälters (2) und nachfolgend zum Karbonisieren des in den ersten und/oder zweiten Kunststoffbehälter (2) gefüllten Produkts verwendet wird.

6. Formfüllmaschine (1) gemäß einem der vorhergehenden Ansprüche, mit einem drehbaren Transportrad (4), an dem eine Mehrzahl an Behandlungsstationen je mit einer Hohlform (6) angebracht ist.

7. Formfüllmaschine (1) gemäß Anspruch 4, weiterhin mit einer Spüleinrichtung, die zum Spülen eines Vorformlings oder des hergestellten oder fertiggestellten Kunststoffbehälters (2) ausgebildet ist, und mit Mitteln zum Zuführen eines Teils des zum Karbonisieren verwendeten CO₂ zu der Spüleinrichtung.

8. Formfüllmaschine (1) gemäß einem der vorhergehenden Ansprüche, weiterhin mit einem mehrstufigen Kompressor (130), der zum Komprimieren des CO₂ ausgebildet ist, und mit Mitteln zum Zuleiten des recycelten CO₂ nach dem Blasformen zu einer der Stufen des mehrstufigen Kompressors (130) und insbesondere weiterhin mit Mitteln zum Beheizen von Leitungen, mit denen der Kompressor (130) mit der Einrichtung zum Blasformen verbunden ist.

9. Formfüllmaschine (1) gemäß einem der vorhergehenden Ansprüche, weiterhin mit Mitteln zum Erzeugen eines Unterdrucks beim Füllen, wobei die Mittel zum Erzeugen eines Unterdrucks insbesondere dazu ausgebildet sind, einen Unterdruck in der Hohlform (6) zu erzeugen.

10. Formfüllmaschine (1) gemäß einem der vorhergehenden Ansprüche, weiterhin mit einer Verschlusseinrichtung, die zum Verschließen der gefüllten Kunststoffbehälter (2) ausgebildet ist.

11. Formfüllmaschine (1) gemäß einem der vorhergehenden Ansprüche, weiterhin mit einem Drehverteiler (19;160), der zum Einleiten von CO₂ und dem Produkt in die Behandlungsstation (5) und zum Ausleiten von CO₂ nach dem Blasformen aus der Behandlungsstation (5) ausgebildet ist.

12. Verfahren zum Herstellen und Füllen eines Kunststoffbehälters (2) mit den an einer Behandlungsstation einer Formfüllmaschine nach Anspruch 1 ausgeführten Schritten:
Recken eines Vorformlings (3) und Einleiten von CO₂ in den Vorformling, um den Kunststoffbehälter (2) zumindest teilweise herzustellen;
Ausleiten des in den Vorformling eingeleiteten CO₂ nach dem zumindest teilweisen Herstellen des Kunststoffbehälters (2);
Einleiten eines Produkts in den zumindest teilweise hergestellten Kunststoffbehälter (2) nach dem Ausleiten des CO₂, um den Kunststoffbehälter (2) fertigzustellen und/oder ihn mit dem Produkt zu füllen; und
Wiederverwenden des ausgeleiteten CO₂.

13. Verfahren gemäß Anspruch 12, mit
Einleiten von unter einem ersten Druck stehenden CO₂ in den Vorformling, um den Kunststoffbehälter (2) teilweise herzustellen;
Einleiten von unter einem zweiten Druck, der größer als der erste Druck ist, in den teilweise hergestellten Kunststoffbehälter (2), um den Kunststoffbehälter (2) fertigzustellen;
Ausleiten des in den Vorformling eingeleiteten CO₂ nach dem Fertigstellen des Kunststoffbehälters (2); und
Einleiten eines Produkts in den fertiggestellten Kunststoffbehälter (2), um den Kunststoffbehälter (2) mit dem Produkt zu füllen.

14. Verfahren gemäß Anspruch 12, mit
Einleiten von CO₂ in den Vorformling, um den Kunststoffbehälter (2) teilweise herzustellen;
Ausleiten des in den Vorformling eingeleiteten CO₂ nach dem teilweisen Herstellen des Kunststoffbehälters (2);
Einleiten eines flüssigen Mediums in den teilweise hergestellten Kunststoffbehälter (2) nach dem Ausleiten des CO₂, um den Kunststoffbehälter (2) fertigzustellen;
Ausleiten des in den teilweise hergestellten Kunststoffbehälter (2) eingeleiteten flüssigen Mediums nach dem Fertigstellen des Kunststoffbehälters (2); und
Füllen des fertiggestellten Kunststoffbehälters (2) mit einem Produkt nach dem Ausleiten des flüssigen Mediums.

## Claims

1. Mould filling machine (1) having a treatment station for the expanding shaping of plastic preforms (3) into plastic containers (2) in a hollow mould (6) and filling the plastic containers (2) with a product, wherein the mould filling machine (1) comprises:
a device for blow moulding for the at least partial production of the plastic containers (2) by means of CO₂; and
a device for filling the at least partially produced plastic containers (2) with the product,
**characterised in that** the mould filling machine further comprises:
means for recycling the CO₂ used for blow moulding, and a device for carbonating the product filled into the at least partially produced or finished plastic containers (2), with the help of the recycled CO₂.

2. Mould filling machine (1) according to claim 1, wherein
the device for blow moulding is configured to produce partially produced plastic containers (2);
the device for filling is configured to finish the partially produced plastic containers (2) with the product.

3. Mould filling machine (1) according to claim 1, wherein
the device for blow moulding is configured to produce partially produced plastic containers (2); and further comprising
a device for finishing the partially produced plastic containers (2) by introducing a liquid medium into the partially produced plastic containers (2); and wherein
the device for filling is configured to fill the finished plastic containers (2) with the product.

4. Mould filling machine (1) according to any one of the preceding claims, in which the means for recycling the CO₂ used for blow moulding provide the recycled CO₂ for carbonating the product filled into the produced or finished plastic container (2) or for blowing out the plastic container (2) filled with the product.

5. Mould filling machine (1) according to any one of the preceding claims, in which the CO₂ recycled during production of a first plastic container (2) is used for pre-blowing a second plastic container (2) and subsequently for carbonating the product filled into the first and/or second plastic container (2).

6. Mould filling machine (1) according to any one of the preceding claims, comprising a rotatable transport wheel (4) on which a plurality of treatment stations are mounted, each with a hollow mould (6).

7. Mould filling machine (1) according to claim 4, further comprising a flushing device which is configured to flush a preform or the produced or finished plastic container (2), and means for supplying part of the CO₂, which is used for carbonating, to the flushing device.

8. Mould filling machine (1) according to any one of the preceding claims, further comprising a multistage compressor (130) configured to compress the CO₂, and means for supplying the recycled CO₂ after blow moulding to one of the stages of the multistage compressor (130), and in particular further comprising means for heating pipes with which the compressor (130) is connected to the blow moulding device.

9. Mould filling machine (1) according to any one of the preceding claims, further comprising means for generating a negative pressure during filling, wherein the means for generating a negative pressure are configured in particular to generate a negative pressure in the hollow mould (6).

10. Mould filling machine (1) according to any one of the preceding claims, further comprising a closing device configured to close the filled plastic containers (2).

11. Mould filling machine (1) according to any one of the preceding claims, further comprising a rotary distributor (19; 160) which is configured to introduce CO₂ and the product into the treatment station (5) and to discharge CO₂ after blow moulding from the treatment station (5).

12. Method for manufacturing and filling a plastic container (2) with the steps carried out at a treatment station of a mould filling machine according to claim 1:
stretching a preform (3) and introducing CO₂ into the preform to produce at least part of the plastic container (2);
discharging the CO₂ introduced into the preform after the at least partial production of the plastic container (2);
introducing a product into the at least partially produced plastic container (2) after discharge of the CO₂ to finish the plastic container (2) and/or to fill it with the product; and
reusing the discharged CO₂.

13. Method according to claim 12, comprising
introducing CO₂ which is under a first pressure into the preform to partially produce the plastic container (2);
introducing CO₂ under a second pressure greater than the first pressure into the partially produced plastic container (2) to finish the plastic container (2);
discharging the CO₂ introduced into the preform after finishing of the plastic container (2); and
introducing a product into the finished plastic container (2) to fill the plastic container (2) with the product.

14. Method according to claim 12, comprising
introducing CO₂ into the preform to partially produce the plastic container (2);
discharging the CO₂ introduced into the preform after the plastic container (2) has been partially produced;
introducing a liquid medium into the partially produced plastic container (2) after CO₂ has been discharged in order to finish the plastic container (2);
discharging the liquid medium introduced into the partially produced plastic container (2) after finishing the plastic container (2); and
filling the finished plastic container (2) with a product after the liquid medium has been discharged.

## Revendications

1. Machine de formage et de remplissage (1) comportant un poste de traitement pour le formage par expansion de préformes de matière plastique (3) en contenants en matière plastique (2), dans un moule creux (6), et pour le remplissage des contenants en matière plastique (2) avec un produit, la machine de formage et de remplissage (1) comprenant,
un dispositif pour le formage par soufflage pour la fabrication au moins partielle des contenants en matière plastique (2) à l'aide de CO₂ ; et
un dispositif pour le remplissage avec le produit, desdits contenants en matière plastique (2) au moins fabriqués partiellement ;
**caractérisée en ce que** la machine de formage et de remplissage comprend par ailleurs :
des moyens de recyclage du CO₂ utilisé pour le formage par soufflage, et un dispositif pour carbonater, à l'aide du CO₂ recyclé, le produit dont ont été remplis les contenants en matière plastique (2) au moins partiellement fabriqués ou achevés.

2. Machine de formage et de remplissage (1) selon la revendication 1, dans laquelle
le dispositif de formage par soufflage est configuré pour réaliser des contenants en matière plastique (2) au moins partiellement fabriqués ;
le dispositif pour le remplissage est configuré pour achever les contenants en matière plastique (2) au moins partiellement fabriqués, avec le produit.

3. Machine de formage et de remplissage (1) selon la revendication 1, dans laquelle
le dispositif de formage par soufflage est configuré pour réaliser des contenants en matière plastique (2) au moins partiellement fabriqués ; la machine comprenant par ailleurs
un dispositif pour achever les contenants en matière plastique (2) partiellement fabriqués, par introduction d'un agent liquide dans les contenants en matière plastique (2) partiellement fabriqués ; et machine dans laquelle le dispositif pour le remplissage est configuré pour remplir avec le produit, les contenants en matière plastique (2) achevés.

4. Machine de formage et de remplissage (1) selon l'une des revendications précédentes, dans laquelle les moyens pour le recyclage du CO₂ utilisé pour le formage par soufflage, fournissent le CO₂ recyclé pour carbonater le produit dont ont été remplis les contenants en matière plastique (2) fabriqués ou achevés, ou pour assurer un balayage par soufflage du contenant en matière plastique (2) ayant été rempli par le produit.

5. Machine de formage et de remplissage (1) selon l'une des revendications précédentes, dans laquelle le CO₂ recyclé lors de la fabrication d'un premier contenant en matière plastique (2), est utilisé pour assurer un pré-soufflage d'un deuxième contenant en matière plastique (2) et ensuite carbonater le produit dont a été rempli le premier et/ou le deuxième contenant en matière plastique (2).

6. Machine de formage et de remplissage (1) selon l'une des revendications précédentes, comprenant une roue de transport rotative (4) sur laquelle sont placés une pluralité de postes de traitement avec chacun un moule creux (6).

7. Machine de formage et de remplissage (1) selon la revendication 4, comprenant par ailleurs un dispositif de rinçage, qui est configuré pour assurer un rinçage d'une préforme ou du contenant en matière plastique (2) fabriqué ou achevé, et comprenant des moyens pour amener une partie du CO₂ utilisé pour carbonater, au dispositif de rinçage.

8. Machine de formage et de remplissage (1) selon l'une des revendications précédentes, comprenant par ailleurs un compresseur (130) à étages multiples, qui est configuré pour comprimer le CO₂, et comprenant des moyens pour amener le CO₂ recyclé après le formage par soufflage, vers un des étages du compresseur (130) à étages multiples, et comprenant par ailleurs notamment des moyens pour échauffer des conduites par lesquelles le compresseur (130) est relié au dispositif de formage par soufflage.

9. Machine de formage et de remplissage (1) selon l'une des revendications précédentes, comprenant par ailleurs des moyens pour produire une dépression lors du remplissage, les moyens pour produire une dépression étant notamment configurés pour produire une dépression dans le moule creux (6).

10. Machine de formage et de remplissage (1) selon l'une des revendications précédentes, comprenant par ailleurs un dispositif de fermeture, qui est configuré pour assurer la fermeture des contenants en matière plastique (2) remplis.

11. Machine de formage et de remplissage (1) selon l'une des revendications précédentes, comprenant par ailleurs un distributeur rotatif (19; 160), qui est configuré pour introduire du CO₂ et le produit dans le poste de traitement (5), et pour évacuer du CO₂, après le formage par soufflage, hors du poste de traitement (5).

12. Procédé pour fabriquer et remplir un contenant en matière plastique (2), comprenant les étapes suivantes exécutées dans un poste de traitement d'une machine de formage et de remplissage selon la revendication 1 :
l'étirage d'une préforme (3) et l'introduction de CO₂ dans la préforme, en vue de fabriquer au moins partiellement le contenant en matière plastique (2) ;
l'extraction du CO₂ ayant été introduit dans la préforme, après la fabrication au moins partielle du contenant en matière plastique (2) ;
l'introduction d'un produit dans le contenant en matière plastique (2) au moins partiellement fabriqué, après l'évacuation du CO₂, pour achever la fabrication du contenant en matière plastique (2) et/ou le remplir avec le produit ; et
la réutilisation du CO₂ extrait.

13. Procédé selon la revendication 12, comprenant l'introduction dans la préforme, de CO₂ se trouvant sous une première pression, en vue de fabriquer au moins partiellement le contenant en matière plastique (2) ;
l'introduction dans le contenant en matière plastique (2) partiellement fabriqué, de CO₂ se trouvant sous une deuxième pression, qui est plus grande que la première pression, en vue d'achever la fabrication du contenant en matière plastique (2) ;
l'extraction du CO₂ introduit dans la préforme, après achèvement de la fabrication du contenant en matière plastique (2) ; et
l'introduction d'un produit dans le contenant en matière plastique (2) achevé, en vue de remplir le contenant en matière plastique (2) avec le produit.

14. Procédé selon la revendication 12, comprenant l'introduction de CO₂ dans la préforme, en vue de fabriquer au moins partiellement le contenant en matière plastique (2) ; ;
l'extraction du CO₂ ayant été introduit dans la préforme, après la fabrication partielle du contenant en matière plastique (2) ;
l'introduction d'un agent liquide dans le contenant en matière plastique (2) partiellement fabriqué, après l'extraction du CO₂, en vue d'achever le contenant en matière plastique (2) ;
l'extraction de l'agent liquide ayant été introduit dans le contenant en matière plastique (2) partiellement fabriqué, après l'achèvement de la fabrication du contenant en matière plastique (2) ; et
le remplissage du contenant en matière plastique (2) achevé, avec le produit, après extraction de l'agent liquide.
